# FASCICULE DE BREVET EUROPEEN

(11) **EP 0 655 388 B1**
(45) Date de publication et mention de la délivrance du brevet: **30.07.1997**
(21) Numéro de dépôt: 93490023.4
(22) Date de dépôt: 26.11.1993
(51) Int. Cl.: B65B 5/10, A01G 9/08

(54) **Procédé de mise en place de racines dans un bac parallélépipédique et moyens pour la mise en oeuvre de ce procédé**
Verfahren zur Einführung von Wurzeln in einen quaderförmigen Behälter, und Mittel zum Durchführen des Verfahrens
Process for introducing roots in a rectangular case and means for carrying out the same

(43) Date de publication de la demande: 31.05.1995
(73) Titulaire: SOCIETES REUNIES BRIFFOTEAUX, "S.R.B.", S.A., F-52290 Eclaron (FR)
(72) Inventeur: Darene, François, F-80400 Moyencourt (FR)
(74) Mandataire: Ecrepont, Robert Pierre

(56) Documents cités:
- EP-A- 0 360 310
- FR-A- 2 618 043
- FR-A- 2 622 534
- SU-A- 169 444
- US-A- 4 033 090
- US-A- 4 862 677

## Description

L'invention se rapporte à un procédé de mise en place de racines dans un bac parallélépipédique.

Elle se rapporte plus particulièrement mais non exclusivement à la mise en place de racines d'endives pour la production de chicons.

L'invention se rapporte également aux moyens pour la mise en oeuvre du procédé.

Notamment, dans le cas de la production des chicons, les endives sont dans un premier temps cultivées en pleine terre afin de fournir des racines puis ces racines sont parées et placées en culture dans un lieu obscure où le chicon se développe à partir de la racine.

Pour contrôler la pousse du chicon, ceux-ci sont installés dans des chambres où l'on contrôle notamment la température et le degré d'humidité.

Afin d'optimiser le volume de ces chambres, les racines sont placées debout dans des bacs que l'on superpose en ménagant entre deux bacs un espace suffisant pour le développement du chicon.

Pour cela, préalablement à la plantation, les racines ainsi que les bouquets folliaires sont raccourcis pour être mises à la même longueur.

Une fois les racines parées, la plantation se fait manuellement à savoir le bac est placé debout pour que son fond soit sensiblement vertical puis on constitue une succession de rangées de racines dans lesquelles rangées les racines ont leur axe longitudinal globalement perpendiculaire au fond.

Lorsque le bac est rempli, soit on comble les interstices avec un substrat tel de la tourbe ou on le remplit partiellement d'un liquide nutritif qui va permettre la croissance du chicon.

Cette opération de plantation manuelle s'avère longue et fastidieuse d'autant plus qu'elle s'ajoute aux opérations manuelles antérieures semblables notamment lors du parage, pour lequel les racines ont déjà été placées une à une sur les moyens de réception d'une machine dite recoupeuse, sur lesquels moyens de réception tels un convoyeur elles sont généralement alignées pour ensuite être amenées entre deux outils coupants qui sectionnent à la fois la racine et le bouquet folliaire.

Un autre inconvénient est lié au fait que le remplissage ne peut se faire que par une seule personne et que la mise en place de racines dans un bac est plus lente que la mise en place de racines sur un convoyeur.

Un des résultats que l'invention vise à obtenir est un procédé de mise en place du type précité qui remédie aux inconvénients ci-dessus.

A cet effet, elle a pour objet un tel procédé notamment caractérisé en ce que :
- sur un support en au moins une pièce sensiblement parallèle à la base du bac et de longueur équivalente à la longueur de cette base, on constitue périodiquement une rangée de racines qui, placées côte à côte, sont alignées au niveau de leur collet,
- on amène le support légèrement au dessus du niveau où la rangée doit être placée et on translate au moins une partie du support jusqu'au fond du bac,
- à l'arrière de la rangée de racines placée sur le support, c'est à dire du côte du bouquet folliaire, on amène un poussoir,
- par un déplacement relatif d'au moins deux des éléments que sont le bac, le poussoir et au moins une partie du support, on maintient la rangée de racines dans le bac et,
- avant de redéposer dans le bac une nouvelle rangée de racines, on place au dessus de la rangée nouvellement déposée, une plaque dite d'appui et, par un déplacement relatif entre cette plaque et la base temporaire du bac, on tasse l'ensemble des rangées présentes dans le bac puis,
- on recommence le cycle jusqu'à ce que le bac soit plein.

L'invention se rapporte également aux moyens en vue de la mise en oeuvre de ce procédé.

L'invention sera bien comprise à l'aide de la description ci-aprés faite à titre d'exemple non limitatif en regard du dessin ci-annexé qui représente schématiquement :

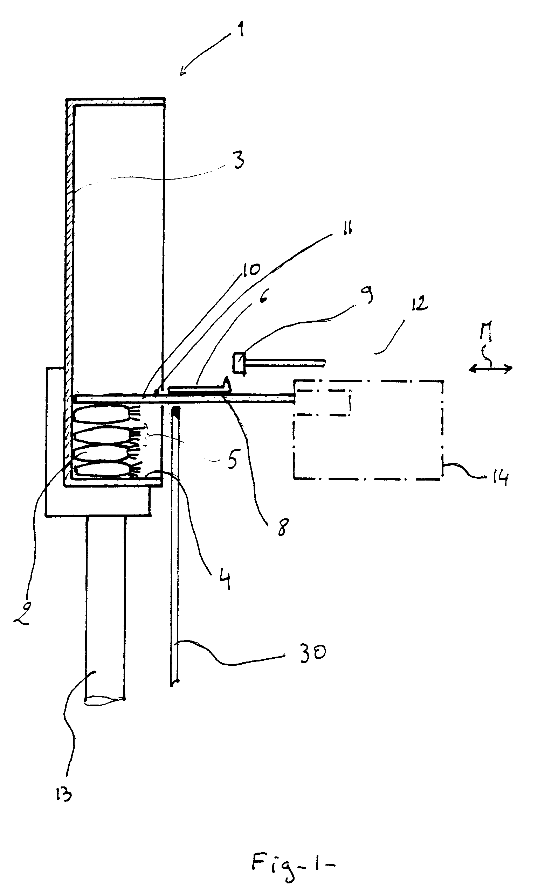

- figure 1 : une vue en coupe d'un bac pendant la plantation,

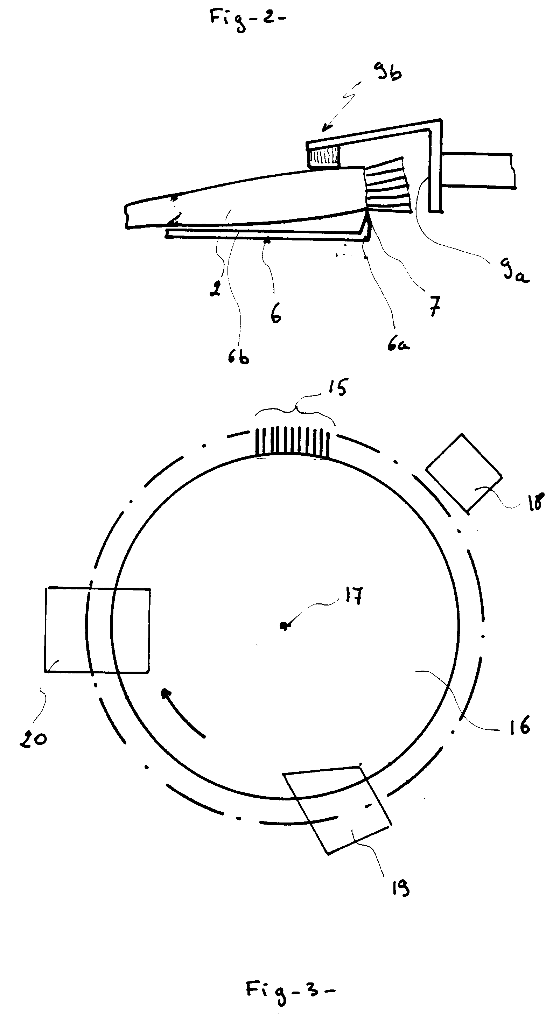

- figure 2 : un détail de réalisation,
- figure 3 : un exemple de réalisation.

En se reportant au dessin, on voit un bac 1 parallélépipédique destiné à recevoir une pluralité de racines 2 notamment d'endives disposées en rangées.

Lorsque les racines 2 sont ainsi mises en place leur axe longitudinal est sensiblement perpendiculaire au fond 3 du bac.

Les bacs sont ensuite entreposés dans des chambres pour la mise en culture.

De préférence, avant d'être mises en place, les racines sont parées et, à cet effet, les racines sont mises à même longueur et les bouquets folliaires sont raccourcis mais en veillant à toujours préserver le germe qui va former le légume ou le chicon.

Pour la mise en place des racines dans le bac, on dispose le bac de manière que son fond 3 soit au moins sensiblement vertical puis, à partir de sa paroi 4 latérale horizontale, la plus basse formant une base temporaire 4, on constitue une succession de rangées 5 de racines, chacune de ces rangées occupant toute la longueur de la base 4 dite temporaire et l'ensemble des rangées le remplissage complet du bac.

Selon le procédé objet de l'invention :
- sur un support 6 en au moins une pièce sensiblement parallèle à la base 4 du bac et de longueur équivalente à la longueur de cette base, on constitue périodiquement une rangée 5 de racines 2 qui, placées côte à côte, sont alignées au niveau de leur collet 7,
- on amène le support 6 légèrement au dessus du niveau où la rangée doit être placée et on translate au moins une partie du support 6 jusqu'au fond 3 du bac 1,
- à l'arrière de la rangée 5 de racines placée sur le support 6, c'est à dire du côte du bouquet folliaire, on amène un poussoir 9,
- par un déplacement relatif d'au moins deux des éléments que sont le bac, le poussoir et au moins une partie du support, on maintient la rangée de racines dans le bac et,
- avant de redéposer dans le bac une nouvelle rangée 5 de racines, on place au dessus de la rangée nouvellement déposée, une plaque 1O dite d'appui et, par un déplacement relatif entre cette plaque 1O et la base 4 temporaire du bac, on tasse l'ensemble des rangées présentes dans le bac puis,
- on recommence le cycle jusqu'à ce que le bac soit plein.

Avantageusement, au moins pendant le tassement, avec la plaque d'appui, on appuie l'ensemble des rangées déjà mises en place contre le fond du bac à l'aide d'un bouclier 30.

Dans un mode préféré :
- on se munit d'un support 6 en au moins deux éléments distincts dont une grille de rangement des racines et une plaque d'appui telle celle 1O avec laquelle on tasse les rangées et,
- on ne translate vers le fond du bac que la plaque d'appui et avec le poussoir on fait glisser les racines hors de la grille pour les déposer sur le bord de la plaque qui sera ensuite retirée pour enfin être ramenée par dessus les nouvelles rangées.

Selon l'invention, on déplace la plaque d'appui uniquement dans un mouvement M de translation sensiblement perpendiculaire au fond 3 du bac et, pour ajuster les positions relatives en hauteur du support et de la base ainsi que pour tasser les racines, on déplace la base 4 dite temporaire par rapport à cette plaque d'appui.

Selon l'invention :
- on s'assure que la plaque 1O d'appui est en place,
- on amène la grille au dessus de cette plaque d'appui,
- on glisse la rangée de racines portée par la grille sur la face supérieure 11 de la plaque d'appui jusqu'à ce que les extrémités terminales des racines soient en appui sur le fond du bac puis,
- en maintenant les extrémités terminales des racines en appui sur le fond :
   . on dégage la plaque d'appui,
   . on déplace le bac vers le bas d'une hauteur suffisante pour réintroduire la plaque d'appui au dessus de la nouvelle rangée déposée et,
   . lorsque la plaque est mise en place, on déplace le bac vers le haut pour tasser son contenu.

De préférence, c'est avant de parer les racines que l'on constitue une rangée de racines alignées par leur collet sur la grille.

Outre le bac, les moyens pour la mise en oeuvre de l'invention comprennent :
- un support 6 en au moins une pièce, de longueur de la base 4 dite temporaire du bac,
- des moyens 12 pour translater au moins une partie du support jusqu'au fond du bac de manière telle que la face inférieure 8 du support se situe légèrement au dessus de la première rangée disponible dans le bac à compter du bas,
- un poussoir 9 déplacable sur une course de longueur au moins égale à la profondeur du bac,
- des moyens 13, 14 pour effectuer des déplacements relatifs entre au moins deux des éléments que sont le bac, le poussoir et au moins une partie du support, afin de glisser la rangée de racines dans le bac,
- une plaque d'appui 10 de longueur sensiblement égale à la longueur du support 6 et des moyens 13, 14 de déplacement relatifs de la plaque d'appui et de la base temporaire du bac ainsi que
- des moyens de commande synchronisant les déplacements relatifs du bac, de la plaque d'appui, du poussoir et du support.

Dans une forme préférée de réalisation, le support 6 est constitué d'au moins deux élément distincts dont :
- une grille comprenant une traverse 6a sur laquelle est fixée une pluralité de doigts 6b parallèles et
- un plaque d'appui telle celle précitée.

De préférence, les moyens comprennent en outre un bouclier 3O d'appui des racines déjà mises en place dans le bac au moins pendant la phase de tassement.

Avantageusement, la traverse 6b de la grille est en relief de manière à s'insérer dans le creux entre la racine et le bouquet folliaire et permet ainsi d'aligner par le collet, les racines.

Selon l'invention, le poussoir 9 comprend :
- une face 9a dite de butée orientée perpendiculairement au sens de déplacement du poussoir,
- un moyen d'appui 9b qui, lorsque le poussoir pousse la rangée de racines, s'applique à une distance prédéterminée du collet sur le dessus de cette rangée,
- un moyen moteur (non représenté) et des moyens de guidage (non représentés) du dit poussoir.

Avantageusement, le moyen d'appui 9b consiste en au moins un élément souple tel une brosse.

Dans une forme préférée de réalisation, la grille est reliée à d'autres grilles pour former chacune l'un des secteurs 15 d'une plaque 16 circulaire, laquelle plaque, tournant séquentiellement autour d'un axe de rotation 17, permet à chaque secteur de se trouver tour à tour devant un poste 18 de placement des racines puis un poste de recoupage 19 puis un poste 20 de remplissage de bac, cette plaque circulaire étant alors remarquable en ce que les dents constituant les grilles, au lieu d'être orientées radialement sont, sur chaque secteur, parallèles entre eux.

Chaque secteur est défini pour que la corde de ce secteur soit sensiblement égale à la longueur du fond temporaire.

Avantageusement, l'utilisation de doigts parallèles permet le guidage des racines dans leur déplacement et évite que, lorsque le poussoir se déplace les racines ne partent en éventail.

Il est possible ainsi de combiner une machine de recoupage avec les moyens pour la mise en oeuvre du procédé ce qui permet de manipuler les racines qu'une seule fois.

## Revendications

1. Procédé de mise en place de racines dans un bac parallélépipédique destiné à recevoir une pluralité de racines (2) notamment d'endives disposées en rangées et qui, lorsqu'elles sont ainsi mises en place, ont leur axe longitudinale sensiblement perpendiculaire au fond (3) du bac,
selon lequel procédé pour la mise en place des racines dans le bac, on dispose le bac de manière que son fond (3) soit au moins sensiblement vertical puis, à partir de sa paroi (4) latérale horizontale la plus basse formant une base temporaire (4), on constitue une succession de rangées (5) de racines, chacune de ces rangées occupant toute la longueur de la base (4) dite temporaire et l'ensemble des rangées formant le remplissage complet du bac,
ce procédé étant **CARACTERISE** en ce que :
- sur un support (6) en au moins une pièce sensiblement parallèle à ladite base (4) du bac et de longueur équivalente à la longueur de cette base, on constitue périodiquement une rangée (5) de racines (2) qui, placées côte à côte, sont alignées au niveau de leur collet (7),
- on amène le support (6) légèrement au dessus du niveau où la rangée doit être placée et on translate au moins une partie du support (6) jusqu'au fond (3) du bac (1),
- à l'arrière de la rangée (5) de racines placée sur le support (6), c'est à dire du côte du bouquet folliaire, on amène un poussoir (9),
- par un déplacement relatif d'au moins deux des éléments que sont le bac, le poussoir et au moins une partie du support, on maintient et dépose la rangée de racines dans le bac et,
- avant de redéposer dans le bac une nouvelle rangée (5) de racines, on place au dessus de la rangée nouvellement déposée, une plaque (1O) dite d'appui et, par un déplacement relatif entre cette plaque (1O) et la base (4) temporaire du bac, on tasse l'ensemble des rangées présentes dans le bac puis,
- on recommence le cycle jusqu'à ce que le bac soit plein.

2. Procédé selon la revendication 1 **caractérisé** en ce qu'au moins pendant le tassement, avec la plaque d'appui, on appuie l'ensemble des rangées déjà mises en place contre le fond du bac à l'aide d'un bouclier (30).

3. Procédé selon la revendication 1 ou 2 **caractérisé** en ce que :
- on se munit d'un support (6) en au moins deux éléments distincts dont une grille de rangement des racines et une plaque d'appui telle celle (1O) avec laquelle on tasse les rangées et,
- on ne translate vers le fond du bac que la plaque d'appui et avec le poussoir on fait glisser les racines hors de la grille pour les déposer sur le bord de la plaque qui sera ensuite retirée pour enfin être ramenée par dessus les nouvelles rangées.

4. Procédé selon la revendication 3 **caractérisé** en ce qu'on déplace la plaque d'appui uniquement dans un mouvement (M) de translation sensiblement perpendiculaire au fond (3) du bac et, pour ajuster les positions relatives en hauteur du support et de la base ainsi que pour tasser les racines, on déplace la base (4) dite temporaire par rapport à cette plaque d'appui.

5. Procédé selon l'une quelconque des revendications 1 à 4 **caractérisé** en ce que :
- on s'assure que la plaque (1O) d'appui est en place,
- on amène la grille au dessus de cette plaque d'appui,
- on glisse la rangée de racines portée par la grille sur la face supérieure (11) de la plaque d'appui jusqu'à ce que les extrémités terminales des racines soient en appui sur le fond du bac puis,
- en maintenant les extrémités terminales des racines en appui sur le fond :
. on dégage la plaque d'appui,
. on déplace le bac vers le bas d'une hauteur suffisante pour réintroduire la plaque d'appui au dessus de la nouvelle rangée déposée et,
. lorsque la plaque est mise en place, on déplace le bac vers le haut pour tasser son contenu.

6. Procédé selon la revendication 1 **caractérisé** en ce que c'est avant de parer les racines que l'on constitue une rangée de racines alignées par leur collet sur la grille.

7. Moyens pour la mise en oeuvre du procédé de mise en place de racines (2) dans un bac parallélépipédique (1), dans lequel bac (1) qui comprend un fond (3) et des parois latérales (4) les racines sont disposées en rangées, selon la revendication 1,
ces moyens comprennant :
- un support (6) en au moins une pièce,
- des moyens (12) pour translater au moins une partie du support jusqu'au fond du bac de manière telle que la face inférieure (8) du support se situe légèrement au dessus de la première rangée disponible dans le bac à compter du bas,
- un poussoir (9),
- des moyens (13, 14) pour effectuer des déplacements relatifs entre au moins deux des éléments que sont le bac, le poussoir et au moins une partie du support, afin de glisser la rangée de racines dans le bac,
- une plaque d'appui (10) de longueur sensiblement égale à la longueur du support (6) et des moyens (13, 14) de déplacement relatifs de la plaque d'appui et de la base temporaire du bac ainsi que
- des moyens de commande synchronisant les déplacements relatifs du bac, de la plaque d'appui, du poussoir et du support selon le procédé de la revendication 1.

8. Moyens selon la revendication 7 **caractérisés** en ce que le support (6) est constitué d'au moins deux élément distincts dont :
- une grille comprenant une traverse (6a) sur laquelle est fixée une pluralité de doigts (6b) parallèles et
- ledite plaque d'appui.

9. Moyens selon la revendication 7 **caractérisés** en ce que le poussoir (9) comprend :
- une face (9a) dite de butée orientée perpendiculairement au sens de déplacement du poussoir,
- un moyen d'appui (9b) qui, lorsque le poussoir pousse la rangée de racines, s'applique sur le dessus de cette rangée,
- un moyen moteur et des moyens de guidage du dit poussoir.

10. Moyens selon la revendication 7 **caractérisés** en ce que la grille est reliée à d'autres grilles pour former chacune l'un des secteurs (15) d'une plaque (16) circulaire, cette plaque circulaire étant alors remarquable en ce que les dents constituant les grilles, au lieu d'être orientées radialement sont, sur chaque secteur, parallèles entre eux.

## Claims

1. A method of placing roots in a parallelepipedic case intended to accommodate a plurality of roots (2), particularly endives, arranged in rows and which, when they are thus placed, have their longitudinal axis substantially perpendicular to the bottom (3) of the case, according to which method of placing roots in the case the case is arranged such that its bottom (3) is at least substantially vertical and then, starting from its lowest horizontal side wall (4) forming a temporary base (4), a succession of rows (5) of roots is constituted, each row occupying the entire length of the so-called temporary base (4), and all of the rows forming the complete filling of the case, the method being characterised in that:
- a row (5) of roots (2) which, when placed side by side, are aligned at the level of their necks (7), is periodically constituted on a support (6) made in at least one part, which is substantially parallel to the base (4) of the case and the length of which is equivalent to the length of the base,
- the support (6) is brought to slightly above the level at which the row is to be placed and at least one portion of the support (6) is displaced to the bottom (3) of the case (1),
- a pusher (9) is brought to the back of the row (5) of roots placed on the support (6), i.e. on the side of the bunch of leaves,
- the row of roots is held and set down in the case by a relative movement of at least two of the elements consisting of the case, the pusher and at least a portion of the support, and
- before a new row (5) of roots is set down in the case, a so-called supporting plate (10) is placed above the newly set-down row and all of the rows present in the case are packed down by a movement of this plate (10) and the temporary base (4) of the case relative to one another, then
- the cycle is repeated until the case is full.

2. A method according to claim 1, characterised in that, at least during the packing down with the supporting plate, all of the rows already placed are pressed against the bottom of the case with the aid of a screen (30).

3. A method according to claim 1 or 2, characterised in that:
- a support (6) is provided consisting of at least two discrete elements, namely a grid for arranging roots and a supporting plate such as the one (10) with which the rows are packed down, and
- only the supporting plate is displaced towards the bottom of the case and the pusher is used to slide the roots off the grid in order to set them down on the edge of the plate, which will then be withdrawn so that it can finally be moved above the new rows.

4. A method according to claim 3, characterised in that the supporting plate is moved only in a displacement movement (M) substantially perpendicular to the bottom (3) of the case and the so-called temporary base (4) is moved relative to the supporting plate in order to adjust the relative height positions of the support and the base and in order to pack down the roots,

5. A method according to any one of claims 1 to 4, characterised in that:
- it is ensured that the supporting plate (10) is in position,
- the grid is brought above the supporting plate,
- the row of roots supported on the grid is slid onto the upper surface (11) of the supporting plate until the terminal ends of the roots are supported on the bottom of the case, then
- whilst holding the terminal ends of the roots supported on the bottom:
. the supporting plate is moved,
. the case is moved downwards by a distance sufficient to reintroduce the supporting plate above the newly set-down row, and
. when the plate has been positioned, the case is moved upwards in order to pack down its content.

6. A method according to claim 1, characterised in that a row of roots aligned by their necks on the grid is constituted before the roots are trimmed.

7. Means for performing the method of placing roots (2) in a parallelepipedic case (1), the roots being arranged in rows in the case (1), which comprises a bottom (3) and side walls (4), according to claim 1, the means comprising:
- a support (6) made in at least one part,
- means (12) for displacing at least a portion of the support to the bottom of the case such that the lower surface (8) of the support is located slightly above the first row available in the case, starting from the bottom,
- a pusher (9),
- means (13, 14) for effecting relative movements between at least two of the elements consisting of the case, the pusher and at least a portion of the support, in order to slide the row of roots into the case,
- a supporting plate (10), the length of which is substantially equal to the length of the support (6), and means (13, 14) for moving the supporting plate and the temporary base of the case relative to one another, and
- control means synchronising the relative movements of the case, the supporting plate, the pusher and the support according to the method of claim 1.

8. Means according to claim 7, characterised in that the support (6) is constituted by at least two discrete elements, namely:
- a grid comprising a cross-piece (6a) to which a plurality of parallel fingers (6b) is fixed, and
- the supporting plate.

9. Means according to claim 7, characterised in that the pusher (9) comprises:
- a so-called stop surface (9a) oriented perpendicularly to the direction of movement of the pusher,
- a supporting means (9b) which, when the pusher pushes the row of roots, is pressed against the top of this row,
- a motor means and means for guiding the pusher

10. Means according to claim 7, characterised in that the grid is linked to other grids so that each grid forms one of the sectors (15) of a circular plate (16), the circular plate in turn being notable in that the teeth constituting the grids are parallel to one another in each sector, rather than being oriented radially.

## Patentansprüche

1. Verfahren zur Einführung von Wurzeln in einen quaderförmigen Behälter zur Aufnahme einer Vielzahl von Wurzeln (2), insbesondere von Chicoréepflanzen, die in Reihen angeordnet sind und deren Längsachse im wesentlichen senkrecht zum Boden (3) des Behälters verläuft, wenn sie auf diese Weise eingesetzt sind,
bei welchem zum Einführen der Wurzeln in den Behälter dieser so angeordnet wird, daß sein Boden (3) zumindest in vertikaler Richtung verläuft, und dann ab seiner untersten horizontalen Seitenwandung (4), welche eine vorübergehende Basis (4) bildet, eine Abfolge von Wurzelreihen (5) gebildet wird, von denen jede die gesamte Länge der als vorübergehend bezeichneten Basis (4) einnimmt, wobei die Gesamtheit der Reihen die vollständige Füllung des Behälters bildet,
**dadurch gekennzeichnet, daß**
- auf einem aus mindestens einem Stück bestehenden Träger (6), der im wesentlichen parallel zur Basis (4) des Behälters verläuft und eine der Länge dieser Basis entsprechende Länge aufweist, in regelmäßigen Abständen eine Reihe (5) von Wurzeln (2) gebildet wird, die nebeneinander eingesetzt und in Höhe ihres Kopfes (7) fluchtrecht angeordnet sind,
- der Träger (6) leicht über die Höhe geführt wird, in der die Reihe gesetzt werden soll, und zumindest ein Abschnitt des Trägers (6) bis zum Boden 83) des Behälters (1) versetzt wird,
- hinter der auf den Träger (6) gesetzten Reihe (5) von Wurzeln, und zwar auf der Seite der Blattansätze, ein Schieber (9) verstellt wird,
- durch eine relative Versetzung mindestens zwei der Elemente, nämlich des Behälters, des Schiebers und zumindest eines Teils des Trägers, die Reihe von Wurzeln im Behälter gehalten und aufgesetzt wird, und
vor dem erneuten Einsetzen einer neuen Reihe (5) von Wurzeln in den Behälter über die neu eingesetzte Reihe eine als Abstützung bezeichnete Platte (10) aufgelegt wird und durch relative Verschiebung zwischen dieser Platte (10) und der vorübergehenden Basis (4) des Behälters die Gesamthelt der in Behälter vorhandenen Reihen angedrückt wird, und daß anschließend
der Arbeitszyklus wieder von vorne beginnt, bis der Behälter gefüllt ist.

2. Verfahren nach Anspruch 1, **dadurch gekennzeichnet**, daß zumindest während des Andrückens die Gesamtheit der bereits gegen den Boden des Behälters eingesetzten Reihen mit der Abstützplatte mit Hilfe eines Schildes (30) abgestützt wird

3. Verfahren nach Anspruch 1 oder 2, **dadurch gekennzeichnet**, daß:
- eine Abstützung (6) an mindestens zwei getrennten Elementen vorgesehen wird, wovon eines ein Anordnungsgitter für die Wurzeln und das andere eine Abstützplatte, beispielsweise (10), ist, mit welcher die Reihen angedrückt werden, und
- man die Wurzeln zum Boden des Behälters sowie der Stützplatte hin verschiebt und sie dabei mit dem Schieber aus dem Gitter gleiten läßt, um sie auf der Kante der Platte abzusetzen, die anschließend zurückgezogen und schließlich von oben auf die neuen Reihen zurückgesetzt wird.

4. Verfahren nach Anspruch 3, **dadurch gekennzeichnet**, daß die Abstützplatte ausschließlich in einer zum Boden (3) des Behälters im wesentlichen senkrechten Verschiebebewegung (M) verlagert wird und die als vorübergehend bezeichnete Basis (4) zum Einstellen der relativen Höhenlagen des Trägers und der Basis sowie zum Andrücken der Wurzeln bezüglich dieser Abstützplatte verschoben wird.

5. Verfahren nach einem der Ansprüche 1 bis 4, **dadurch gekennzeichnet,** daß:
- sichergestellt wird, daß die Abstützplatte (10) positioniert ist,
- das Gitter über diese Abstützplatte geführt wird,
- man die auf dem Gitter getragenen Reihen von Wurzeln auf die Oberseite (11) der Abstützplatte gleiten laßt, bis die äußersten Wurzelenden sich in Anlage gegen den Boden des Behälters befinden, und anschließend
- unter Aufrechterhalten der Anlage der äußersten Wurzelenden gegen den Boden;
- die Abstützplatte freigegeben wird,
· der Behälter um eine ausreichende Höhe nach unten verschoben wird, um die Abstützplatte über die neue eingesetzte Reihe wieder einzuführen, und
· wenn die Platte angeordnet ist, der Behälter nach oben verschoben wird, um seinen Inhalt anzudrücken.

6. Verfahren nach Anspruch 1, **dadurch gekennzeichnet**, daß noch vor dem Zurichten der Wurzeln eine Reihe von Wurzeln gebildet wird, die über ihren Kopf auf dem Gitter ausgerichtet sind.

7. Mittel zur Durchführung des Verfahrens zur Einführung von Wurzeln in einen quaderförmigen Behälter (1), bei welchem die Wurzeln in Reihen in den Behälter (1) eingesetzt werden, wobei der Behälter einen Boden (3) und Seitenwandungen (4) aufweist, nach Anspruch 1,
wobei die Mittel folgendes aufweisen:
- einen aus mindestens einem Stück bestehenden Träger (6).
- eine Einrichtung (12) zur zumindest teilweisen Verschiebung des Trägers bis zum Boden des Behälters in der Weise, daß die Unterseite (8) des Trägers sich leicht über der von unten her gesehen ersten Reihe befindet, die im Behälter vorhanden ist,
- einen Schieber (9),
- Einrichtungen (13, 14) zur Ausführung der relativen Verschiebebewegungen zwischen mindestens zwei der Elemente, nämlich des Behälters, des Schiebers und zumindest eines Teils des Trägers, um die Wurzelreihe in den Behälter gleiten zu lassen,
- eine Abstützplatte (10) mit einer Länge, die im wesentlichen gleich der Länge des Trägers (6) und der Einrichtungen (13, 14) für die relativen Verschiebewegungen der Abstützplatte und der vorübergehenden Basis ist, sowie
- Betätigungseinrichtungen, welche die relativen Verschiebebewegungen des Behälters, der Abstützplatte, des Schiebers und des Trägers entsprechend dem Verfahren nach Anspruch 1 synchronisieren.

8. Mittel nach Anspruch 7, **dadurch gekennzeichnet**, daß der Träger (6) aus mindestens zwei getrennten Elementen besteht, wovon:
- eines ein Gitter mit einem Querträger (6a) ist, auf welchem eine Vielzahl paralleler Zapfen (6b) befestigt ist, und
- das andere die Abstützplatte ist.

9. Mittel nach Anspruch 7, **dadurch gekennzeichnet**, daß der Schieber (9) folgendes aufweist:
- eine als Anschlag bezeichnete Fläche (9a), die senkrecht zur Verschieberichtung des Schiebers ausgerichtet ist.
- eine Abstützeinrichtung (9b), die sich auf die Oberseite der Reihe anlegt, wenn der Schieber die Wurzelreihe verschiebt,
- eine Antriebseinrichtung und Mittel zur Führung des Schiebers.

10. Mittel nach Anspruch 7, **dadurch gekennzeichnet**, daß das Gitter mit weiteren Gittern verbunden ist, welche jeweils einen der Sektoren (15) einer runden Platte (16) bilden, wobei diese runde Platte nun insoweit bemerkenswert ist, als die die Gitter bildenden Zacken statt radial ausgerichtet zu sein auf jedem Sektor zueinander parallel verlaufen.
